# EUROPEAN PATENT APPLICATION

(11) **EP 2 658 138 A1**
(43) Date of publication of application: **30.10.2013**
(21) Application number: 11851035.3
(22) Date of filing: 21.12.2011
(51) Int. Cl.: H04B 7/00

(54) **METHOD AND DEVICE FOR FREQUENCY DOMAIN TRANSMISSION**

(30) Priority: 21.12.2010 CN 201010598846
(71) Applicant: Huawei Technologies Co., Ltd., Shenzhen, Guangdong 518129 (CN)
(72) Inventor: LIU, Sheng, Shenzhen Guangdong 518129 (CN)
(74) Representative: Kreuz, Georg Maria
(86) International application number: PCT/CN2011/084354
(87) International publication number: WO 2012/083850

(57) **Abstract**

Embodiments of the present invention disclose a central baseband processing unit CBPU, including a switching module and at least one base band unit BBU and further including a resource mapping module. The resource mapping module is configured to perform resource block demapping for uplink frequency domain baseband signals obtained through FFT, and demultiplex signals of each user from corresponding subcarriers; the switching module is configured to transmit the signals of each user to the corresponding BBU; and the BBU is configured to process the received user signals. Correspondingly, embodiments of the present invention also disclose an RRU and a frequency domain transmission method. The technical solution provided in the present invention can improve transmission performance of a C-RAN system.

## Description

This application claims priority to Chinese Patent Application No. 201010598846.1, filed with the Chinese Patent Office on December 21, 2010 and entitled "FREQUENCY DOMAIN TRANSMISSION METHOD AND APPARATUS", which is incorporated herein by reference in its entirety.

### FIELD OF THE INVENTION

The present invention relates to the communication field, and in particular, to a frequency domain transmission method and apparatus.

### BACKGROUND OF THE INVENTION

Compared with a conventional macro base station, the system of a distributed base station is divided into a base band unit BBU (Base Band Unit) and a remote RF unit RRU (Remote RF Unit). The RRU is deployed at an access point far from the BBU. The RRU and the BBU are connected through an optical fiber, and baseband radio signals are transmitted therebetween in analog or digital mode. The distance between the BBU and the RRU generally ranges from tens of meters to one or two hundred meters. In this way, network construction is more flexible and convenient, and antenna deployment is not affected by the location of the equipment room. In addition, the base station system can be designed with a large capacity and the cost of system construction may be reduced. A distributed antenna system DAS (Distributed Antenna System) is similar to a distributed base station having an RRU. However, the distance between the BBU and the RRU may be extended to several hundreds of meters, or even to tens of hundreds of meters. In addition to using a direct optical fiber for connection, optical transmission technologies, such as the passive optical network PON and wave division multiplexing WDM, may also be used for connection. Further, preferably a multi-cell joint processing mode, such as network MIMO (multiple input and multiple output) and multi-cell joint scheduling, is used to reduce interference between cells and further increase the system capacity.

In a C-RAN system architecture, multiple centralized baseband processing units (CBPUs) are included. The CBPUs are connected through a large-capacity optical fiber or an optical transport network (such as DWDM/OTN). Each CBPU is connected to a cell cluster (Cell Cluster) in star or ring mode by using the direct optical fiber or optical transport network. Each CBPU is mainly responsible for processing radio access of users in its cell cluster, including physical layer signal processing, media access control (MAC) processing, and radio resource management (RRM). However, when the processing load of each CBPU is light, that is, when the user service traffic in its cell cluster is light, the CBPU may perform radio access processing for a part of the users in the cell cluster of another CBPU. When the user service traffic in a cell cluster of a CBPU is too heavy that the corresponding CBPU processing resources cannot timely process the radio access of all users in its cell cluster, baseband radio signals in a part of the cells may be routed to the CBPU having a light load and user service traffic in the corresponding cell cluster by using the large-capacity optical fiber or optical transport network connecting the CBPUs. In a C-RAN system, the baseband signals of one RRU are generally processed by multiple BBUs simultaneously, resulting in a common case where the baseband signals of each RRU need to be transmitted to one or multiple BBUs. The above multiple BBUs may be multiple BBUs inside one CBPU, or may be different BBUs of multiple CBPUs.

With the emergence of 3G/4G technologies such as LTE, the radio spectrum is increasingly wider (20 MHz to 100 MHz). Meanwhile, the wide application of multi-antenna technologies, such as MIMO, results in that the required bandwidth for transmitting radio baseband signals between a CBPU and an RRU is higher. For example, in an LTE system, with respect to 20 MHz bandwidth, 2048-point FFT is performed, the subcarrier interval is 15 KHz, and the sampling rate of the baseband signals is 2048 x 15 KHz = 30.72 Msps; with respect to the RRU configured with four transmitting and four receiving antennas, 16-bit ADC/DAC (analog to digital conversion or digital to analog conversion) is used, and 8B/10B coding is used for the transmission line between the CBPU and the RRU. In this case, the bit rate of the uplink/downlink baseband signals reaches 30.72 (Msps) x 4 (antennas) x 16 (bits) x 2 (I/Q components)/(8/10) ≈ 5 Gbps. In addition, the scale of a C-RAN system is very large. For example, a single CBPU can be connected to tens or hundreds of RRUs. This means that each CBPU needs to switch and transmit tens or hundreds of high-speed radio baseband signals, and that higher bandwidth is required for switching and transmitting radio baseband signals between the CBPUs. This presents great challenges to the design and reliable running of the entire C-RAN system. In the prior art, four modes are generally available to implement compression of baseband radio signals, that is, sampling rate reduction, non-linear quantization, IQ data compression, and subcarrier compression.

The rate of the baseband signals is extremely high. Therefore, the compression solution provided in the prior art is complex and causes much performance loss.

### SUMMARY OF THE INVENTION

Embodiments of the present invention provide a frequency domain transmission method and apparatus to improve transmission performance of a C-RAN system.

An embodiment of the present invention provides a centralized baseband processing unit CBPU, including a switching module and at least one base band unit BBU and further including a resource mapping module, where:
the resource mapping module is configured to perform resource block demapping for uplink frequency domain baseband signals obtained through FFT, and demultiplex signals of each user from corresponding subcarriers;
the switching module is configured to transmit the signals of each user to a corresponding BBU; and
the BBU is configured to process the received user signals.

An embodiment of the present invention provides a remote RF unit RRU, including:
an RF processing module, configured to process received RF signals to obtain uplink time domain baseband signals; and
a transforming module, configured to perform FFT for the uplink time domain baseband signals to obtain uplink frequency domain baseband signals, and transmit the uplink frequency domain baseband signals to a resource mapping module, so that the resource mapping module performs resource block demapping for the uplink frequency domain baseband signals and demultiplexes signals of each user from corresponding subcarriers.

An embodiment of the present invention provides an RRU, including:
a transforming module, configured to perform IFFT for downlink frequency domain baseband signals mapped to corresponding subcarriers, to obtain downlink time domain baseband signals; and
an RF processing module, configured to transform the downlink time domain baseband signals to downlink RF signals, and transmit the signals.

An embodiment of the present invention provides a frequency domain transmission method, including:
performing resource block demapping for uplink frequency domain baseband signals obtained through FFT, and demultiplexing signals of each user from corresponding subcarriers;
transmitting the signals of each user to a corresponding BBU; and
processing, by the corresponding BBU, the received user signals.

An embodiment of the present invention provides a frequency domain transmission method, including:
receiving downlink frequency domain baseband signals mapped to corresponding subcarriers, and performing IFFT for the downlink frequency domain baseband signals mapped to the corresponding subcarriers, to obtain downlink time domain baseband signals; and
transmitting the downlink time domain baseband signals.

According to the above technical solutions provided in the embodiments of the present invention, the resource block mapping and FFT processing are performed before the transforming module instead of being performed after the transforming module in the BBU, so that the signals of each user are demultiplexed before the signals are transmitted by the switching module. The switching module transmits the demultiplexed signals of each user to the corresponding BBU for processing, rather than transmitting all the baseband signals. In the uplink direction, the requirement on the bandwidth for transmitting radio signals is reduced in the C-RAN system; in the downlink direction, the signals on the corresponding subcarriers do not need to be transmitted between the CBPU and the RRU. This reduces the bandwidth for transmitting signals between the CBPU and the RRU, and comprehensively improves the transmission performance of the CRAN system.

### BRIEF DESCRIPTION OF THE DRAWINGS

To make the technical solutions provided in embodiments of the present invention or the prior art clearer, the accompanying drawings for illustrating the embodiments of the present invention or the prior art are briefly described below. Apparently, the accompanying drawings are only about some embodiments of the present invention, and persons of ordinary skill in the art can derive other drawings from such accompanying drawings without any creative effort.

FIG. 1 is a structural diagram of a CBPU according to an embodiment of the present invention;

FIG. 2 is a structural diagram of a BBU inside a CBPU according to an embodiment of the present invention;

FIG. 3 is a schematic flowchart of processing downlink signals according to an embodiment of the present invention;

FIG. 4 is a schematic flowchart of processing uplink signals according to an embodiment of the present invention;

FIG. 5 is a schematic diagram of a physical resource block according to an embodiment of the present invention;

FIG. 6 is a structural diagram of a CBPU according to an embodiment of the present invention;

FIG. 7 is a schematic diagram of packetization of user signals according to an embodiment of the present invention;

FIG. 8 is a structural diagram of an RRU according to an embodiment of the present invention;

FIG. 9 is a schematic diagram of a process of generating OFDM signals according to an embodiment of the present invention;

FIG. 10 is a schematic diagram of connection between a CBPU and an RRU according to an embodiment of the present invention;

FIG. 11 is a schematic diagram of connection between a CBPU and an RRU according to an embodiment of the present invention;

FIG. 12 is a schematic diagram of connection between a CBPU and an RRU according to an embodiment of the present invention;

FIG. 13 is a schematic diagram of transmitting frequency domain signals in a synchronous transmission line according to an embodiment of the present invention;

FIG. 14 is a structural diagram of a C-RAN system according to an embodiment of the present invention;

FIG. 15 is a flowchart of a frequency domain transmission method according to an embodiment of the present invention;

FIG. 16 is a flowchart of a frequency domain transmission method according to an embodiment of the present invention; and

FIG. 17 is a flowchart of a frequency domain transmission method according to an embodiment of the present invention;

FIG. 18 is a flowchart of a frequency domain transmission method according to an embodiment of the present invention;

FIG. 19 is a flowchart of a frequency domain transmission method according to an embodiment of the present invention; and

FIG. 20 is a flowchart of a frequency domain transmission method according to an embodiment of the present invention.

### DETAILED DESCRIPTION OF THE EMBODIMENTS

The technical solutions disclosed in embodiments of the present invention are described below with reference to accompanying drawings. Evidently, the embodiments are only some of rather than all of embodiments of the present invention. Persons of ordinary skill in the art can derive other embodiments from the embodiments given herein without making any creative effort, and all such embodiments are covered in the protection scope of the present invention.

Embodiments of the present invention provide a frequency domain transmission method, apparatus, and system, which can be applied in a system based on orthogonal frequency division multiple access (Orthogonal Frequency Division Multiple Access, OFDMA) or a similar technology such as single carrier frequency division multiple access (Single Carrier Frequency Division Multiple Access, SC-FDMA), for example, an LTE system, an LTE-advanced (LTE-Advanced, LTE-A) system, or a worldwide interoperability for microwave access (Worldwide Interoperability for Microwave Access, WiMAX) system, so that the bandwidth for transmitting signals between a CBPU and an RRU can be reduced.

To help persons of ordinary skills in the art better understand the technical solutions provided in the embodiments of the present invention and beneficial effects of the technical solutions, the following describes the technical solutions provided in the embodiments of the present invention.

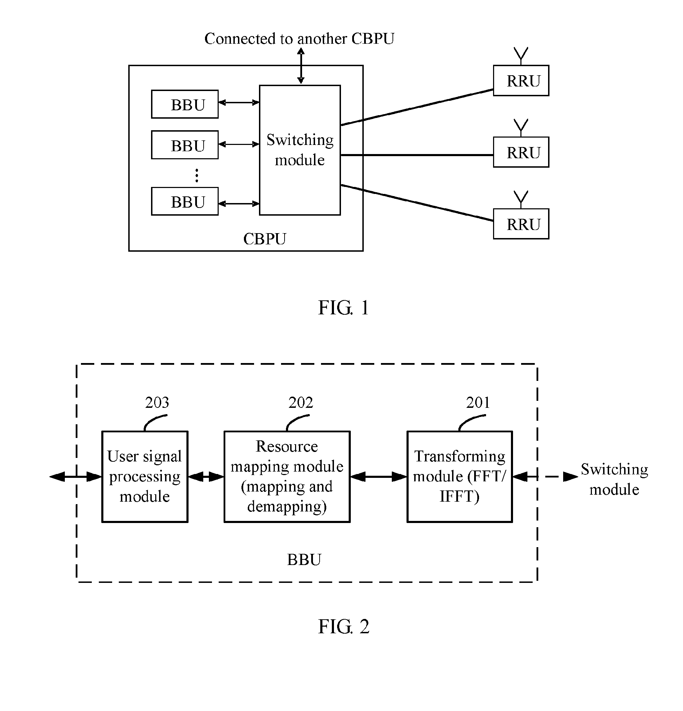

As shown in FIG. 1, an embodiment of the present invention provides a CBPU. The CBPU includes multiple BBUs and a switching module.

Each BBU is responsible for processing data of a part of users, such as processing physical layer signals, MAC addresses, or RRM of a part of users. The switching module is connected to each RRU, and is also connected to another CBPU.

The switching module is configured to transmit radio baseband signals of the RRUs connected to the CBPU and radio baseband signals from other CBPUs to the BBUs for processing.

An RRU in FIG. 1 mainly implements the function of a transceiver. In the downlink direction (that is, from a CBPU to an RRU), the RRU is responsible for transforming downlink digital baseband signals (that is, downlink time domain baseband signals) into RF signals, performing power amplification for the signals, and transmitting the signals through antennas. In the uplink direction (that is, from the RRU to the CBPU), the RRU receives uplink RF signals from antennas, and after the signals are amplified, the RRU transforms the signals into digital baseband signals (that is, uplink time domain baseband signals).

In an embodiment, in the above LTE, LTE-A, and WiMAX systems, a BBU may include a transforming module 201 having a Fast Fourier Transform (Fast Fourier Transform, FFT) function and an Inverse Fast Fourier Transformation (Inverse Fast Fourier Transformation, IFFT) function, a resource mapping module 202 having resource block mapping and demapping functions, and a user signal processing module 203, as shown in FIG. 2. It should be noted that FIG. 2 mainly illustrates BBU function modules on a user plane. In actual applications, the BBU may further include physical layer process control modules, such as a control channel processing module, power control module, hybrid automatic repeat request (Hybrid Automatic Repeat Request, HARQ)/adaptive modulation and coding (Adaptive Modulation and Coding, AMC) module, and random access module; and in addition the BBU may also include function modules responsible for upper layer protocol processing, such as MAC/RRM.

To help better understand the technical solutions provided in the embodiments of the present invention and the beneficial effects of the embodiments of the present invention, based on the BBU illustrated in FIG. 2, the following describes a current method for generating downlink baseband signals and uplink baseband signals.

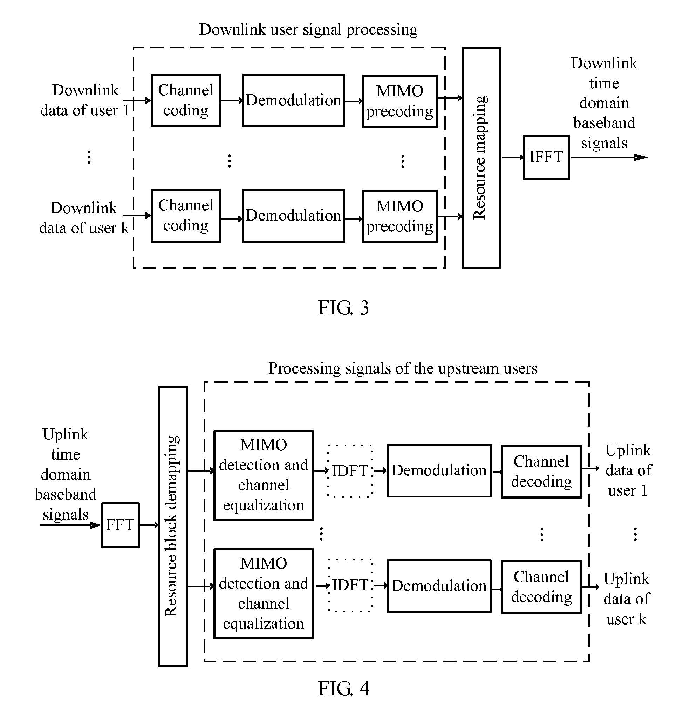

FIG. 3 shows a procedure for processing downlink signals in a typical OFDMA system or SC-FDMA system and FIG. 4 shows a procedure for processing uplink signals in a typical OFDMA system or SC-FDMA system.

As shown in FIG. 3, after channel coding, modulation, and MIMO precoding are performed for the downlink data of each of users 1 to k, the downlink data is mapped to a corresponding subcarrier by using resource block mapping, and downlink frequency domain signals are formed; and the downlink frequency domain signals are transformed into downlink time domain baseband signals by using IFFT.

As shown in FIG. 4, uplink time domain baseband signals are transformed to the frequency domain by using FFT, resource block demapping is performed to demultiplex signals of each user from corresponding subcarriers, and MIMO detection and channel equalization, IDFT (Inverse Discrete Fourier Transform), demodulation, channel decoding, and other processing are performed for the signals of each user to obtain uplink data of the user. It should be noted that IDFT illustrated in FIG. 4 is a dedicated processing manner in the LTE or LTE-A system when SC-FDMA is applied in the uplink.

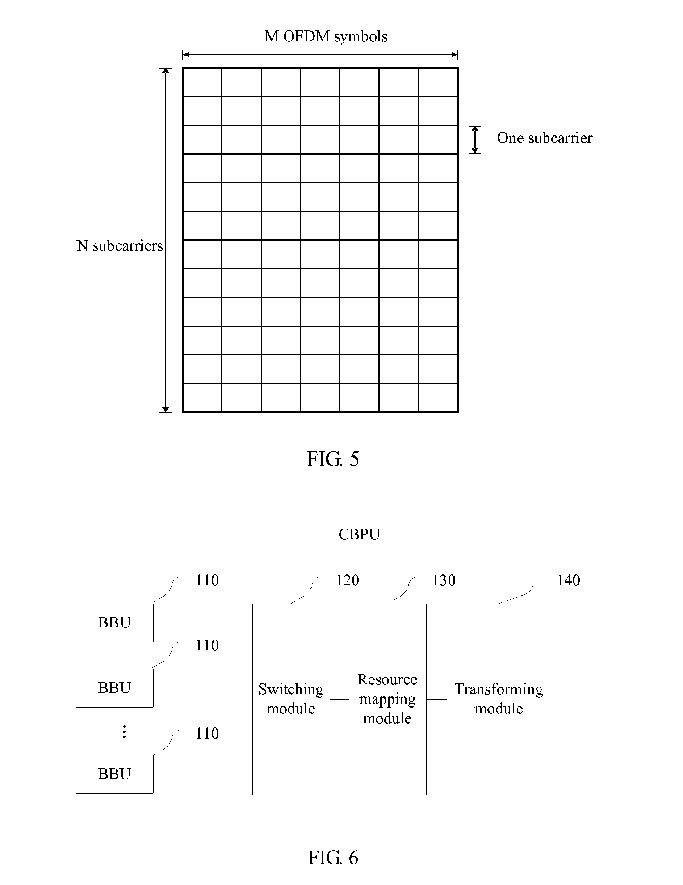

In a system based on the OFDMA technology or a similar technology such as SC-FDMA, air interface resources between the CBPU and the RRU are divided in the form of resource blocks. FIG. 5 is a schematic diagram of a physical resource block (Physical Resource Block, PRB). The PRB includes M continuous OFDM symbols in the time domain, and N continuous subcarriers in the frequency domain. For example, in an LTE/LTE-A system, generally M = 7, and N = 12. With respect to transmission of user data streams, the time and frequency resources allocated to each user are generally a logical virtual resource block (Virtual Resource Blocks, VRB). The system maps the VRB allocated to the user to a PRB within a specified time and frequency range according to a preset rule. The preset rule is described in detail in Section 6.2.3 in 3GPP TS 36.211, which belongs to the prior art and is not detailed herein.

For example, in an LTE/LTE-A system, the VRB and the PRB have the same size, that is, 7 OFDM symbols and 12 subcarriers, and the VRB may be mapped to the PRB within a subframe. When the system allocates a resource for a user, the system specifies information, such as the type, serial number, and size of the corresponding VRB resource, that is, VRB indication information, and in this way, the VRB can be corresponded to a subcarrier occupied by the user at each OFDM symbol time according to the preset rule. Therefore, the above resource mapping and demapping implement user multiplexing and demultiplexing operations. To be specific, resource block mapping refers to allocating signals of each user to the corresponding subcarriers, and resource block demapping refers to demultiplexing the signals of each user from the corresponding subcarriers.

However, in a C-RAN system, due to the following reasons, the baseband signals of one RRU are processed by multiple BBUs simultaneously, resulting in a common case where the baseband signals of each RRU need to be transmitted to one or multiple BBUs.

1. Due to statistical multiplexing for processing resources, load sharing in the case of a fault or overload of some BBUs, or air interface handover caused by user movement, radio signals of different users in a cell may be processed by multiple different BBUs.

2. Due to the application of multi-cell coordinated transmission technologies (such as the CoMP (Coordinated Multiple Point, coordinated multiple point) technology in an LTE-A system), radio signals of some users in a cell may be processed by multiple different BBUs jointly.

3. Due to the application of multi-carrier technologies (such as the carrier aggregation technology in an LTE-A system), the processing capability of a BBU may not be sufficient to process service traffic on multiple carriers in a cell. Therefore, multiple BBUs may be needed to process the service traffic jointly.

The above multiple BBUs may be multiple BBUs inside one CBPU, or may be different BBUs of multiple CBPUs. In addition to transmission of radio baseband signals in the C-RAN system, other high-speed data switching may exist. For example, during joint processing performed by multiple BBUs (for example, CoMP or carrier aggregation), a large amount of intermediate processing data needs to be switched between collaborative BBUs.

However, in the embodiment illustrated in FIG. 2, the resource mapping module having the resource block mapping and demapping functions and the transforming module having the FFT and IFFT functions are located in the BBU. Therefore, in this case, the time domain baseband signals of an RRU are transmitted to each BBU simultaneously. This results in that higher transmission bandwidth is needed though each BBU processes signals of a part of users only.

To reduce the bandwidth for signal transmission between the CBPU and the RRU, as shown in FIG. 6, an embodiment of the present invention provides a CBPU, including a switching module 120 and at least one base band unit BBU 110 and further including a resource mapping module 130.

The resource mapping module 130 is configured to perform resource block demapping for uplink frequency domain baseband signals obtained through FFT, and demultiplex signals of each user from corresponding subcarriers.

The switching module 120 is configured to transmit the signals of each user to a corresponding BBU 110.

In an embodiment, the switching module 120 may transmit the signals of each user to the corresponding BBU according to a preset resource configuration list, where the resource configuration list records a mapping relationship between user information and the BBUs.

The BBU 110 is configured to process the received user signals.

For example, in an embodiment, a corresponding BBU 110 may perform channel decoding and demodulation for the received users.

As shown in the dashed block in FIG. 6, in an embodiment, the CBPU may further include:
a transforming module 140, configured to perform FFT for each of uplink time domain baseband signals from an RRU in a cell cluster corresponding to the CBPU, to obtain uplink frequency domain baseband signals.

As mentioned above, each of the uplink time domain baseband signals from the RRU first undergoes FFT processing by the transforming module 140 to be transformed to the frequency domain, and then signals of each user are demultiplexed by the resource mapping module 130 from the corresponding subcarriers. In this way, the uplink signals of the corresponding cell are decomposed to combinations of uplink signals of each user. The switching module 120 then transmits the signals of each user to the corresponding BBU according to a preset resource configuration list. In an embodiment, the resource configuration list records a mapping relationship between user information and the BBUs. For example, the user information generally includes the ID of a cell where a user is located, and one RRU corresponds to multiple cell IDs. During network construction, the corresponding BBU and RRU of the cell are defined. The mapping relationship between the resource mapping module, the transforming module, and the user information is also preset during network construction. The preset resource configuration list records the mapping relationship between a cell ID, RRU, BBU, resource mapping module, and transforming module.

In an embodiment, the switching module 120 may save a preset resource configuration list which records a mapping relationship between the user information of each user and the BBU. For example, the user information may be a parameter indicating a user identity, such as the international mobile equipment identity (International Mobile Equipment Identity, IMEI) or user ID. For example, the signals of a user A are processed by the BBUs No. #1 and #5. The switching module 120 generates user signal packets by using the mapping relationship between the user information of each user and the BBU provided in the resource configuration list. All user signals processed by a certain BBU are in the same user signal packet. In this way, during each symbol period, the user signals from one or multiple RRUs are transmitted to the BBU in the form of packets, and accordingly the signals of each user are transmitted to a corresponding BBU.

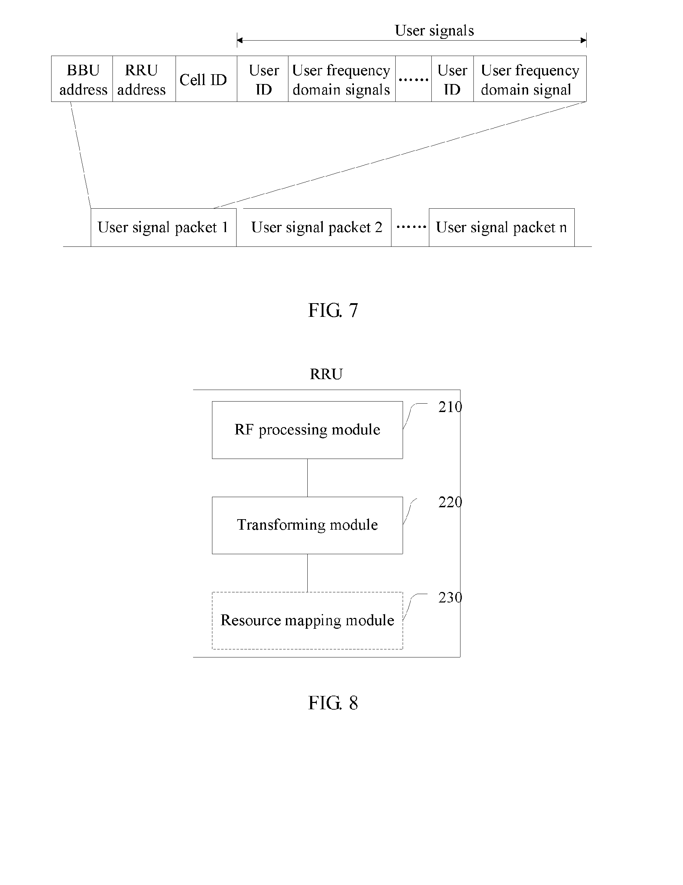

Specifically, as shown in FIG. 7, an embodiment of the present invention provides a schematic diagram of packetization of user signals. As shown in FIG. 7, all user signals processed by a certain RRU are within the same user signal packet. One user signal packet may include fields, such as a BBU address, an RRU address, a cell ID, and a user ID. These fields are used to indicate a destination BBU, a source RRU, a corresponding cell ID, and a corresponding user ID, respectively. In addition, in an embodiment, as shown in FIG. 7, user frequency domain signals refer to user data that is I/Q data in the frequency domain. In this way, the switching module 120 transmits the signal of each user to a corresponding BBU according to the generated user signal packets.

It can be understood that in another embodiment, the switching module 120 may not generate user packets, but transmits the signals of each user to the corresponding BBU directly according to the mapping relationship between the user information and the BBUs recorded in the resource configuration list.

In the embodiment illustrated in FIG. 2, the resource mapping module and the transforming module are both configured after the switching module in the BBU. In this case, uplink time domain baseband signals of a next RRU are transmitted to each BBU simultaneously though each BBU processes signals of a part of users only. In the embodiment of the present invention, the resource mapping module and the transforming module are configured before the switching module rather than being configured in the BBU, so after the transforming module and the resource mapping module process the uplink time domain baseband signals of the RRU, signals of each user are demultiplexed. The switching module 120 needs to transmit only the user signals to be processed among the uplink frequency domain baseband signals, rather than all baseband signals, to the corresponding BBUs. This greatly reduces the requirement on the bandwidth for transmitting radio signals in a C-RAN system. For example, it is assumed that averagely three BBUs process user signals in a cell, with the embodiment of the present invention, only 1/3 of the transmission bandwidth in the prior art is required. Further, in the embodiment corresponding to FIG. 2, the resource mapping module and the transforming module are in the BBU. When the uplink time domain baseband signals of one RRU are processed by multiple BBUs simultaneously, each BBU performs FFT and resource block demapping repeatedly, which causes a waste of BBU resources. However, in the embodiment of the present invention, the resource mapping module and the transforming module are configured before the switching module rather than being configured in the BBU. This reduces a waste of processing resources.

According to the above technical solution provided in the embodiment of the present invention, the resource block mapping and FFT processing are performed before the transforming module instead of being performed after the transforming module in the BBU, so that signals of each user are demultiplexed before the signals are transmitted by the switching module. The switching module transmits the demultiplexed signals of each user to the corresponding BBU for processing, rather than transmitting all the baseband signals. In this way, the requirement on the bandwidth for transmitting radio signals is reduced in the C-RAN system.

As shown in FIG. 8, an embodiment of the present invention provides an RRU, including:
an RF processing module 210, configured to process received RF signals to obtain uplink time domain baseband signals; and
a transforming module 220, configured to perform FFT for the uplink time domain baseband signals to obtain uplink frequency domain baseband signals, and transmit the uplink frequency domain baseband signals to a resource mapping module, so that the resource mapping module performs resource block demapping for the uplink frequency domain baseband signals and demultiplexes signals of each user from corresponding subcarriers.

As shown in the dashed block in FIG. 8, the RRU may further include:
a resource mapping module 230, configured to perform resource block demapping for the uplink frequency domain baseband signals obtained by the transforming module 220, demultiplex signals of each user from corresponding subcarriers, and transmit the signals of each user to a corresponding CBPU, so that the CBPU transmits the signals of each user to corresponding BBU for processing.

After the resource mapping module 230 demultiplexes the signals of each user from the corresponding subcarriers, a switching module in the CBPU may transmit the signals of each user to the corresponding BBU according to a preset resource configuration list.

According to the above technical solution provided in the embodiment of the present invention, the resource block mapping and FFT processing are performed before the transforming module instead of being performed after the transforming module in the BBU, so that the signals of each user are demultiplexed before the signals are transmitted by the switching module. The switching module transmits the demultiplexed signals of each user to the corresponding BBU for processing, rather than transmitting all the baseband signals. In this way, the requirement on the bandwidth for transmitting radio signals is reduced in the C-RAN system.

The above embodiments describe in detail the functions of the modules of the CBPU and RRU in the uplink direction. With reference to FIG. 6, the following further describes the functions of the modules of the CBPU in the downlink direction. As shown in FIG. 6, an embodiment of the present invention provides a CBPU, including a switching module 120 and at least one base band unit BBU 120 and further including a resource mapping module 130. In the downlink direction, the functions of the modules are described as follows:

The BBUs 110 are configured to process downlink data streams of users to obtain downlink frequency domain baseband signals, and transmit the downlink frequency domain baseband signals to the switching module 120.

In an embodiment, processing of the downlink data streams of the users includes performing channel coding and demodulation for the downlink data streams of the users.

The switching module 120 is configured to transmit the downlink frequency domain baseband signals, which are transmitted by the BBUs 110, to the corresponding resource mapping module 130.

According to an embodiment, the switching module 120 may transmit the downlink frequency domain baseband signals to the corresponding resource mapping module 130 according to a preset resource configuration list, where the resource configuration list records a mapping relationship between user information and the resource mapping module.

The resource mapping module 130 is configured to perform resource block mapping for the corresponding downlink frequency domain baseband signals transmitted by the switching module 120, and map the transmitted downlink frequency domain baseband signals to corresponding subcarriers.

Further, in an embodiment, in the downlink direction, the transforming module 140 illustrated in FIG. 6 is configured to perform IFFT for the downlink frequency domain baseband signals mapped to the corresponding subcarriers, to obtain the downlink time domain baseband signals, and transmit the signals.

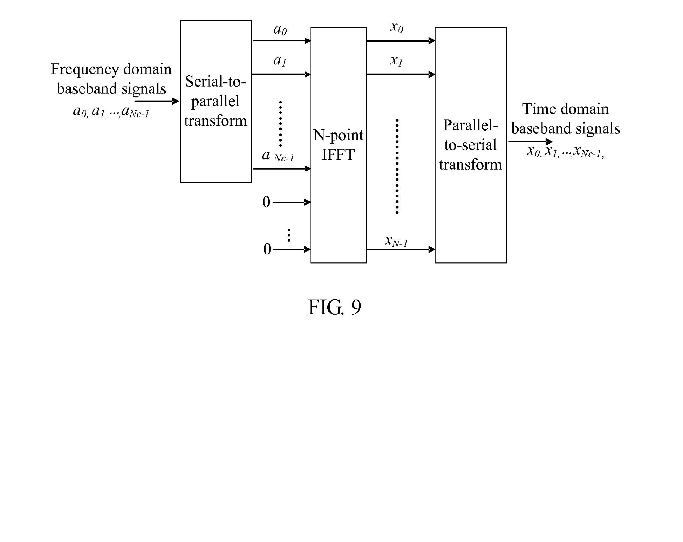

Specifically, FIG. 9 further shows a process of generating downlink OFDM signals according to another embodiment of the present invention. As shown in FIG. 9, the frequency domain baseband signals *a*ₒ*, a₁, ... ,a*_{*Nc-*1} are mapped to *N_{c}* subcarriers through serial-to-parallel transform, and the rest of the subcarriers are padded with zeros. Afterward, N-point IFFT is performed to obtain the time domain baseband signals *x*₀, *x*₁,···, *x*_{*N*-1}. Generally, *N* is far greater than *N_{c}* . For example, in an LTE system, with respect to 20 MHz bandwidth, *N_{c}* =1200, N = 2048, and the subcarrier interval is 15 KHz. In this case, the rate of the time domain baseband signals is 2048 x 15 KHz = 30.72 Mbps, while the rate of the frequency domain baseband signals is 1200 x 15 KHz = 18 Mbps. In the embodiment of the present invention, the resource mapping module and the transforming module are configured before the switching module. Therefore, compared with direct transmission of the time domain baseband signals, the bandwidth for transmitting signals between the CBPU and the RRU is greatly lowered. In addition, when the air interface of a cell is not fully loaded, some of the *N_{c}* subcarriers within each OFDM symbol may be idle (padded with zeros). Because the resource mapping module and the transforming module are configured before the switching module, the signals corresponding to the idle subcarriers are not transmitted, and only the signals of each user in the occupied subcarriers are transmitted. This further reduces the requirement on the bandwidth for transmitting signals between the CBPU and the RRU.

According to the above technical solution provided in the embodiment of the present invention, the resource mapping module and the transforming module are configured before the switching module, so that the signals on the corresponding subcarriers do not need to be transmitted between the CBPU and the RRU. This reduces the bandwidth for transmitting signals between the CBPU and the RRU.

The following describes the functions of the modules in the RRU in the downlink direction by referring to FIG. 8. In the downlink direction, as shown in FIG. 8, an embodiment of the present invention provides an RRU, including:
a transforming module 220, configured to perform IFFT for downlink frequency domain baseband signals mapped to corresponding subcarriers, to obtain downlink time domain baseband signals; and
an RF processing module 210, configured to transform the downlink time domain baseband signals into downlink RF signals, and transmit the signals.

As shown in the dashed block in FIG. 8, the RRU may further include a resource mapping module 230. In the downlink direction, the resource mapping module 230 is configured to perform resource block mapping for the downlink frequency domain baseband signals transmitted by a CBPU, and map the downlink frequency domain baseband signals to corresponding subcarriers.

According to the above technical solution provided in the embodiment of the present invention, the resource mapping module and the transforming module are configured before the switching module, so that the signals on the corresponding subcarriers do not need to be transmitted between the CBPU and the RRU. This reduces the bandwidth for transmitting signals between the CBPU and the RRU.

To help persons of ordinary skill in the art better understand the technical solutions provided in the embodiments of the present invention, the following describes the technical solutions with reference to a schematic diagram of connection between the CBPU and at least one RRU.

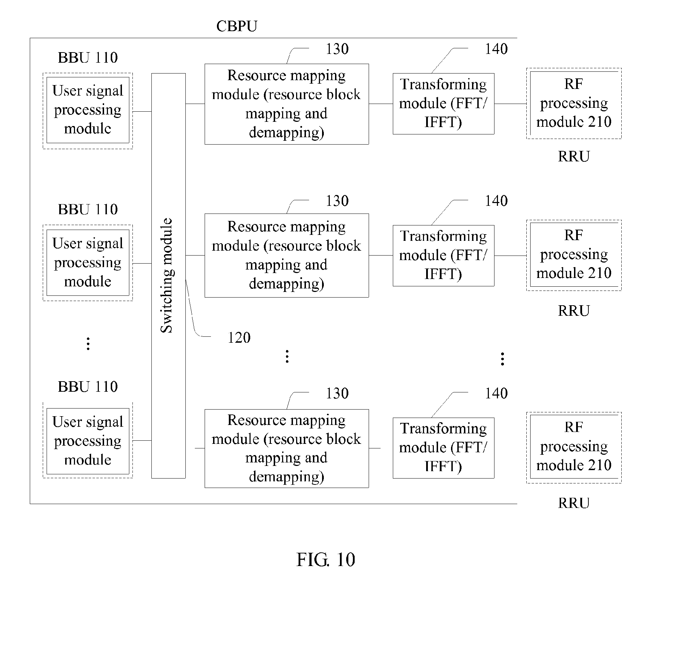

As shown in FIG. 10, an embodiment of the present invention provides a schematic diagram of connection between a CBPU and RRUs. As shown in FIG. 10, multiple RRUs are connected to one CBPU. The multiple RRUs are RRUs in a cell cluster corresponding to the CBPU. As can be seen from FIG. 10, the CBPU includes a switching module 120 and at least one base band unit BBU 110, and further includes at least one resource mapping module 130 and at least one transforming module 140. According to FIG. 10, in this embodiment, the resource mapping module 130 and the transforming module 140 are configured before the switching module 120 rather than being configured in the BBU.

In the uplink direction:

An RF processing module 210 is configured to process received RF signals to obtain uplink time domain baseband signals, and transmit the uplink time domain baseband signals to the CBPU connected to the RF processing module 210.

The transforming module 140 is configured to perform FFT for the uplink time domain baseband signals transmitted by the RF processing module 210 in the RRU in a cell cluster corresponding to the CBPU, to obtain uplink frequency domain baseband signals.

The resource mapping module 130 is configured to perform resource block demapping for the uplink frequency domain baseband signals obtained through FFT, and demultiplex signals of each user from corresponding subcarriers.

The switching module 120 is configured to transmit the signals of each user to corresponding BBU 110.

In an embodiment, the switching module 120 may transmit the signals of each user to the corresponding BBU according to a preset resource configuration list, where the resource configuration list records a mapping relationship between user information and the BBUs.

The BBU 110 is configured to process the received corresponding user signals.

In the downlink direction:

The BBU 110 is configured to process downlink data streams of users to obtain downlink frequency domain baseband signals, and transmit the downlink frequency domain baseband signals to the switching module 120.

The switching module 120 is configured to transmit the downlink frequency domain baseband signals, which are transmitted by each BBU 110, to the corresponding resource mapping module 130.

In an embodiment, the switching module 120 may transmit the downlink frequency domain baseband signals to the corresponding resource mapping module 130 according to a preset resource configuration list, where the resource configuration list records a mapping relationship between user information and the resource mapping module.

The resource mapping module 130 is configured to perform resource block mapping for the downlink frequency domain baseband signals transmitted by the switching module 120, and map the transmitted downlink frequency domain baseband signals to corresponding subcarriers.

The transforming module 140 is configured to perform IFFT for the downlink frequency domain baseband signals mapped to the corresponding subcarriers, to obtain downlink time domain baseband signals, and transmit the signals.

An RF processing module 210 is configured to transform the downlink time domain baseband signals, which are transmitted by the transforming module 140 in the CBPU, into downlink RF signals, and transmit the signals.

The specific functions of the modules are described in the above embodiments and details are not described again herein.

According to the above technical solution provided in the embodiment of the present invention, the resource block mapping and FFT processing are performed before the transforming module instead of being performed after the transforming module in the BBU, so that signals of each user are demultiplexed before the signals are transmitted by the switching module. The switching module transmits the demultiplexed signals of each user to the corresponding BBU for processing, rather than transmitting all the baseband signals. In this way, the requirement on the bandwidth for transmitting radio signals is reduced in the C-RAN system. Further, the resource mapping module and the transforming module are configured before the switching module, so that the signals on the corresponding subcarriers do not need to be transmitted between the CBPU and the RRU. This reduces the bandwidth for transmitting signals between the CBPU and the RRU.

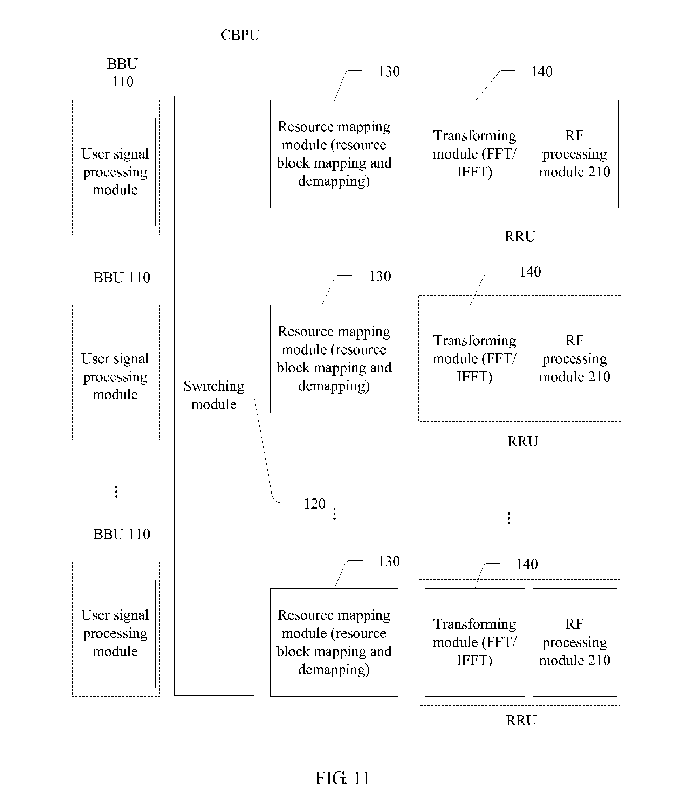

As shown in FIG. 11, an embodiment of the present invention provides another schematic diagram of connection between a CBPU and multiple RRUs. As shown in FIG. 11, multiple RRUs are connected to one CBPU. The multiple RRUs are RRUs in a cell cluster corresponding to the CBPU. As can be seen from FIG. 11, the CBPU includes a switching module 120 and at least one base band unit BBU 110 and further includes at least one resource mapping module 130 and at least one transforming module 140. According to FIG. 11, in this embodiment, the resource mapping module 130 is configured before the switching module 120 rather than being configured in the BBU, but is still in the CBPU; and the transforming module 140 is configured in an RRU rather than being configured in a BBU.

In the uplink direction:

An RF processing module 210 is configured to process received RF signals to obtain uplink time domain baseband signals, and transmit the uplink time domain baseband signals to the transforming module 140.

The transforming module 140 is configured to perform FFT for the uplink time domain baseband signals transmitted by the RF processing module 210, to obtain uplink frequency domain baseband signals, and transmit the uplink frequency domain baseband signals to the resource mapping module 130.

The resource mapping module 130 is configured to perform resource block demapping for the uplink frequency domain baseband signals transmitting by the transforming module 140 in the RRU, and demultiplex signals of each user from corresponding subcarriers.

The switching module 120 is configured to transmit the signals of each user to a corresponding BBU 110.

In an embodiment, the switching module 120 may transmit the signals of each user to the corresponding BBU according to a preset resource configuration list, where the resource configuration list records a mapping relationship between user information and the BBUs.

The BBU 110 is configured to process the received corresponding user signals.

In the downlink direction:

The BBUs 110 are configured to process downlink data streams of users to obtain downlink frequency domain baseband signals, and transmit the downlink frequency domain baseband signals to the switching module 120.

The switching module 120 is configured to transmit the downlink frequency domain baseband signals, which are transmitted by the BBUs 110, to the corresponding resource mapping module 130.

In an embodiment, the switching module 120 may transmit the downlink frequency domain baseband signals to the corresponding resource mapping module 130 according to a preset resource configuration list, where the resource configuration list records a mapping relationship between user information and the resource mapping module.

The resource mapping module 130 is configured to perform resource block mapping for the downlink frequency domain baseband signals transmitted by the switching module 120, map the downlink frequency domain baseband signals to corresponding subcarriers, and transmit the signals to the transforming module 140 in the RRU.

The transforming module 140 is configured to perform IFFT for the downlink frequency domain baseband signals that are mapped to the corresponding subcarriers and transmitted by the resource mapping module 130, to obtain downlink time domain baseband signals.

An RF processing module 210 is configured to transform the downlink time domain baseband signals, which are obtained by the transforming module 140, into downlink RF signals, and transmit the signals.

The functions of the modules are described in the above embodiments, and details are not repeated herein.

According to the above technical solution provided in the embodiment of the present invention, the resource block mapping and FFT processing are performed before the transforming module instead of being performed after the transforming module in the BBU, so that signals of each user are demultiplexed before the signals are transmitted by the switching module. The switching module transmits the demultiplexed signals of each user to the corresponding BBU for processing, rather than transmitting all the baseband signals. In this way, the requirement on the bandwidth for transmitting radio signals is reduced in the C-RAN system. Further, the resource mapping module and the transforming module are configured before the switching module, so that the signals on the corresponding subcarriers do not need to be transmitted between the CBPU and the RRU. This reduces the bandwidth for transmitting signals between the CBPU and the RRU.

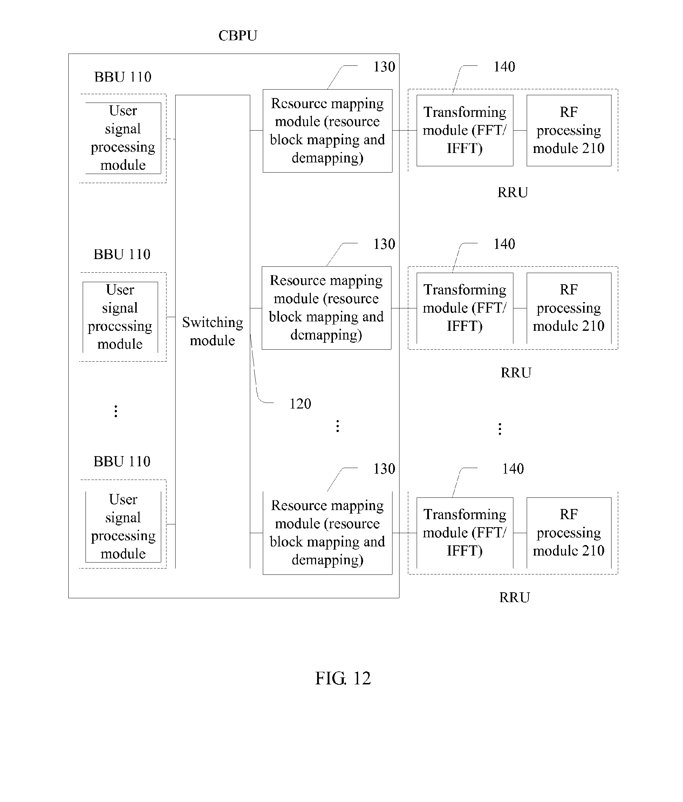

As shown in FIG. 12, an embodiment of the present invention provides another schematic diagram of connection between a CBPU and RRUs. As shown in FIG. 12, multiple RRUs are connected to one CBPU. The multiple RRUs are RRUs in a cell cluster corresponding to the CBPU. As can be seen from FIG. 12, the CBPU includes a switching module 120 and at least one base band unit BBU 110, and further includes at least one resource mapping module 130 and at least one transforming module 140. According to FIG. 12, in this embodiment, the resource mapping module 130 and the transforming module 140 are configured in an RRU rather than being configured in a BBU.

In the uplink direction:

An RF processing module 210 is configured to process received RF signals to obtain uplink time domain baseband signals, and transmit the uplink time domain baseband signals to the transforming module 140.

The transforming module 140 is configured to perform FFT for the uplink time domain baseband signals transmitted by the RF processing module 210, to obtain uplink frequency domain baseband signals, and transmit the uplink frequency domain baseband signals to the resource mapping module 130.

The resource mapping module 130 is configured to perform resource block demapping for the uplink frequency domain baseband signals transmitted by the transforming module 140, demultiplex signals of each user from corresponding subcarriers, and transmit the demultiplexed signals to the switching module 120 in the CBPU.

The switching module 120 is configured to transmit the signals of each user to a corresponding BBU 110.

In an embodiment, the switching module 120 may transmit the signals of each user to the corresponding BBU according to a preset resource configuration list, where the resource configuration list records a mapping relationship between user information and the BBUs.

The BBU 110 is configured to process the received corresponding user signals.

In the downlink direction:

The BBUs 110 are configured to process downlink data streams of users to obtain downlink frequency domain baseband signals, and transmit the downlink frequency domain baseband signals to the switching module 120.

The switching module 120 is configured to transmit the downlink frequency domain baseband signals, which are transmitted by the BBUs 110, to the corresponding RRU.

In an embodiment, the switching module 120 may transmit the downlink frequency domain baseband signals to the corresponding RRU according to a preset resource configuration list, where the resource configuration list records a mapping relationship between user information and the RRU.

The resource mapping module 130 is configured to perform resource block mapping for the downlink frequency domain baseband signals transmitted by the switching module 120, map the downlink frequency domain baseband signals to corresponding subcarriers, and transmit the signals to the transforming module 140.

The transforming module 140 is configured to perform IFFT for the downlink frequency domain baseband signals that are mapped to the corresponding subcarriers and transmitted by the resource mapping module 130, to obtain downlink time domain baseband signals.

An RF processing module 210 is configured to transform the downlink time domain baseband signals, which are obtained by the transforming module 140, into downlink RF signals, and transmit the signals.

The functions of the modules are described in the above embodiments, and details are not repeated herein.

It should be noted that in this embodiment, because the resource mapping module 130 and the transforming module 140 are configured in the RRU rather than being configured in the BBU, VRB resource information allocated to each user in a cell, that is, VRB indication information (information such as the type, serial number, and size of a VRB resource), needs to be provided by the CBPU to the RRU by using the interface between the RRU and the CBPU. In this way, the resource mapping module 130 configured in the RRU can implement user multiplexing and demultiplexing operations by using a preset mapping rule between a VBR and a PRB according to the VRB indication information. To be specific, in the downlink direction, signals of each user are allocated to corresponding subcarriers, and the signals of each user are then demultiplexed from the corresponding subcarriers in the uplink direction.

In this embodiment, the resource mapping module 130 and the transforming module 140 are configured in an RRU rather than being configured in a BBU; therefore, an interface protocol is required to support the communication between the RRU and the CBPU.

In this embodiment, the interface protocol between the RRU and the CBPU generally uses a synchronous transmission solution. For example, the CPRI (Common Public Radio Interface, Common Public Radio Interface) protocol may be used. In the CPRI protocol, the Layer 1 (physical layer) protocol uses the TDM (Time Division Multiplexing, time division multiplexing) manner.

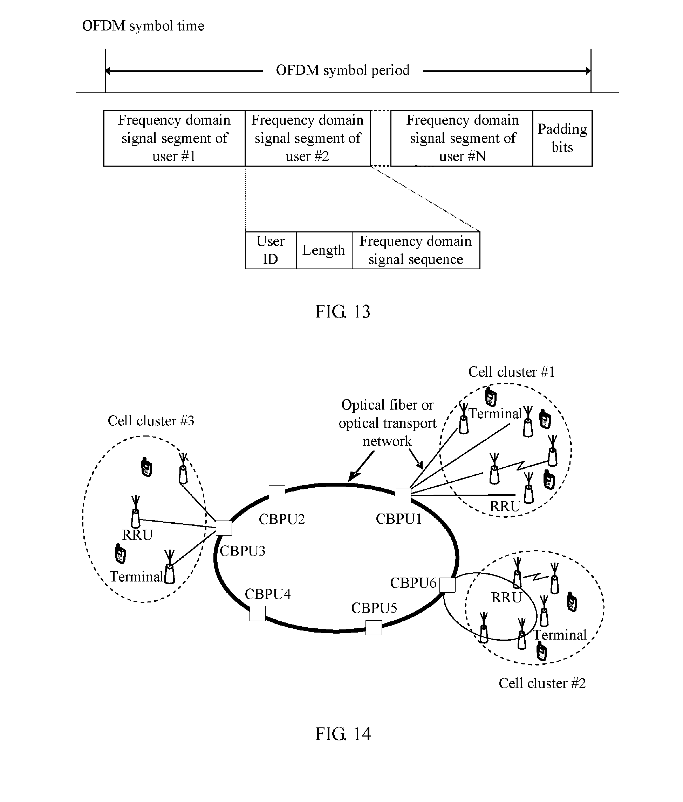

FIG. 13 shows an example where frequency domain baseband signals are transmitted in a synchronous transmission line. At the start point of each OFDM symbol timing, frequency domain signal segments of users within a current OFDM symbol period of an RRU begin to be transmitted, where the end point of one frequency domain signal segment is immediately followed by the start point of another frequency domain signal segment. After the frequency domain signal segments of all the users within the current OFDM symbol period are transmitted, if some bits are still idle, padding bits are transmitted until the current OFDM symbol period is over. A user frequency domain signal segment further includes fields, such as a user ID, a segment length, and a user frequency domain signal sequence. The user ID identifies a user, and the segment length indicates the length of bits of the entire user frequency domain signal segment. In this way, the segment length may be used to determine the start point of a next user frequency domain signal segment. Accordingly, all user frequency domain signal segments within the current OFDM symbol period may be determined one by one, and therefore data of each user is separated.

In addition, in the embodiment illustrated in FIG. 11, the transforming module 140 is configured in an RRU. However, the resource mapping module 130 is still in the CBPU. Therefore, the VRB resource information allocated to each user in a cell, that is, the VRB indication information (information such as the type, serial number, and size of the VRB resource) does not need to be provided by the CBPU to the RRU by using the interface between the RRU and the CBPU. As compared with the embodiment illustrated in FIG. 12, design of the interface between the RRU and the CBPU is simplified.

Therefore, with respect to the embodiment illustrated in FIG. 11, within each OFDM symbol period, the RRU transmits the frequency domain baseband signals sequentially to the CBPU by using the interface line between the RRU and the CBPU, and the resource mapping module 130 implements user multiplexing and demultiplexing operations. Obviously, as compared with the embodiment illustrated in FIG. 12, design of the interface between the RRU and the CBPU is simpler, a signal structure similar to that illustrated in FIG. 11 does not need to be used, and the frequency domain baseband signals only need to be transmitted sequentially, which is the same as the existing manner for transmitting frequency domain signals by using the interface protocol between the RRU and the CBPU. By using the OFDM signals in FIG. 9 as an example, within each OFDM symbol period in an embodiment, the RRU transmits the frequency domain baseband signals *a*ₒ*,a*₁,···, a_{*Nc*-1} sequentially to the CBPU by using the interface line between the RRU and the CBPU, and the resource mapping module 130 implements user multiplexing and demultiplexing operations. A signal structure similar to that illustrated in FIG. 11 does not need to be used, and the frequency domain baseband signals *aₒ,a*1,···, *a*_{*Nc*-1} only need to be transmitted sequentially, which is the same as the existing manner for transmitting frequency domain signals by using the interface protocol between the RRU and the CBPU.

However, in the embodiment illustrated in FIG. 10, because the transforming module 140 and the resource mapping module 130 are still in the CBPU, and the interface between the CBPU and the RRU does not change, the signals that transmitted by the CBPU to the RRU are time domain signals. Therefore, in the embodiment illustrated in FIG. 10, time domain signals may be transmitted still by using the existing interface protocol between the RRU and the CBPU.

According to the above technical solution provided in the embodiment of the present invention, the resource block mapping and FFT processing are performed before the transforming module instead of being performed after the transforming module in the BBU, so that the signals of each user are demultiplexed before the signals are transmitted by the switching module. The switching module transmits the demultiplexed signals of each user to the corresponding BBU for processing, rather than transmitting all the baseband signals. In this way, the requirement on the bandwidth for transmitting radio signals is reduced in the C-RAN system. Further, the resource mapping module and the transforming module are configured before the switching module, so that the signals on the corresponding subcarriers do not need to be transmitted between the CBPU and the RRU. This reduces the bandwidth for transmitting signals between the CBPU and the RRU.

As shown in FIG. 14, an embodiment of the present invention also provides a C-RAN system, including: at least one CBPU node (CBPU 1, CBPU 2, CBPU 3, CBPU, 4, CBPU 5, and CBPU 6 shown in FIG. 13) and multiple RRUs corresponding to the at least one CBPU.

As shown in FIG. 14, at least one RRU connected to each CBPU forms a cell cluster corresponding to the CBPU. For ease of description, FIG. 14 shows only three cell clusters, that is, cell cluster 1, cell cluster 2, and cell cluster 3 corresponding to the CBPU 1, CBPU 6, and CBPU 3, respectively. The connection between each CBPU node and multiple corresponding RRUs may be the connection illustrated in any one of the embodiments in FIGS. 10, 11, and 12. The functions of the modules in the CBPU and RRU are described in detail in the above embodiments, and details are not repeated herein.

According to the above technical solution provided in the embodiment of the present invention, the resource block mapping and FFT processing are performed before the transforming module instead of being performed after the transforming module in the BBU, so that signals of each user are demultiplexed before the signals are transmitted by the switching module. The switching module transmits the demultiplexed signals of each user to the corresponding BBU for processing, rather than transmitting all the baseband signals. In this way, the requirement on the bandwidth for transmitting radio signals is reduced in the system. Further, the resource mapping module and the transforming module are configured before the switching module, so that the signals on the corresponding subcarriers do not need to be transmitted between the CBPU and the RRU. This reduces the bandwidth for transmitting signals between the CBPU and the RRU.

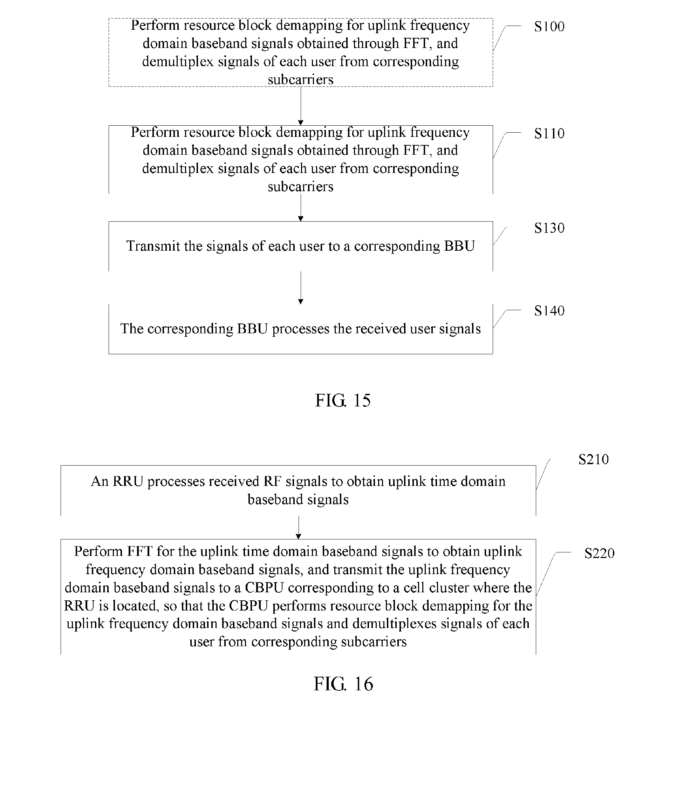

Corresponding to the above apparatus embodiments, as shown in FIG. 15, an embodiment of the present invention provides a frequency domain transmission method, including the following steps:

S110. Perform resource block demapping for uplink frequency domain baseband signals obtained through FFT, and demultiplex signals of each user from corresponding subcarriers.

It can be understood that according to the description of the above embodiments, in an embodiment, the uplink frequency domain baseband signals in step S110 are received from an RRU. Step S 110 may specifically include:
performing, by a CBPU, FFT for each of uplink time domain baseband signals from an RRU in a corresponding cell cluster to obtain uplink frequency domain baseband signals, and performing resource block demapping for the uplink frequency domain baseband signals.

In an embodiment, step S110 may specifically include:
processing, by the RRU, received RF signals to obtain uplink time domain baseband signals, performing FFT processing for the uplink time domain baseband signals to obtain uplink frequency domain baseband signals, and transmitting the uplink frequency domain baseband signals to the CBPU corresponding to the cell cluster where the RRU is located; and performing, by the CBPU, resource block mapping for the uplink frequency domain baseband signals.

S120. Transmit the signals of each user to a corresponding BBU.

In an embodiment, S120 specifically includes:
transmitting the signals of each user to the corresponding BBU according to a preset resource configuration list, where the resource configuration list records a mapping relationship between user information and the BBUs.

For example, in an embodiment, the signals of a certain user A are processed by the BBUs No. #1 and #5. User signal packets are generated by using the mapping relationship between the user information of each user and the BBUs provided in the resource configuration list. All user signals processed by a certain BBU are in the same user signal packet. In this way, during each symbol period, the user signals from one or multiple RRUs are transmitted to a BBU in the form of packets, and accordingly the signals of each user are transmitted to the corresponding BBU. The specific schematic diagram of a user packet, as shown in FIG. 7, is described in detail in the above embodiments and not detailed herein.

It can be understood that in another embodiment, user packets may not be generated, but the signals of each user are transmitted to the corresponding BBU directly according to the mapping relationship between the user information and the BBUs recorded in the resource configuration list.

S130. The corresponding BBU processes the received user signals.

For example, in an embodiment, the corresponding BBU in S130 may perform channel decoding and demodulation for the received users.

As shown in the dashed block in FIG. 15, in an embodiment, before step S110, the method may further include the following step:

S100. Perform FFT for each of uplink time domain baseband signals from an RRU in a corresponding cell cluster to obtain uplink frequency domain baseband signals.

In steps S100 and S110, the CPBU performs FFT for each of uplink time domain baseband signals from an RRU in a corresponding cell cluster to obtain uplink frequency domain baseband signals, and performs resource block demapping for the uplink frequency domain baseband signals.

In the embodiment illustrated by FIG. 2, the resource mapping module and the transforming module are both configured after the switching module in the BBU. In this case, uplink time domain baseband signals of a next RRU are transmitted to each BBU simultaneously though each BBU processes signals of a part of users only. In the embodiment of the present invention, resource block demapping and FFT are performed before the switching step S120, so after FFT and resource block demapping are performed for the uplink time domain baseband signals of the RRU, the signals of each user are demultiplexed. In this way, in step S120, only the user signals to be processed among the uplink frequency domain baseband signals, rather than all baseband signals, need to be transmitted to the corresponding BBUs. This greatly reduces the requirement on the bandwidth for transmitting radio signals in a C-RAN system. For example, it is assumed that averagely three BBUs process user signals in a cell, with the embodiment of the present invention, only 1/3 of the transmission bandwidth in the prior art is required. Further, in the embodiment corresponding to FIG. 2, the resource block demapping module and the transforming module are in the BBU. When the uplink time domain baseband signals of one RRU are processed by multiple BBUs simultaneously, each BBU performs FFT and resource block demapping repeatedly, which causes a waste of BBU resources. However, in the embodiment of the present invention, resource block demapping and FFT are performed for the user signals before the user signals are transmitted to the corresponding BBUs. This reduces the waste of the processing resources.

According to the above technical solution provided in the embodiment of the present invention, the resource block demapping and FFT processing are performed first to demultiplex signals of each user. In this case, only the user signals to be processed among the uplink frequency domain baseband signals, rather than all the baseband signals, need to be transmitted to the corresponding BBUs. In this way, the requirement on the bandwidth for transmitting radio signals is reduced in the C-RAN system.

As shown in FIG. 16, an embodiment of the present invention further provides a frequency domain transmission method, including the following steps:

S210. An RRU processes received RF signals to obtain uplink time domain baseband signals.

S220. Perform FFT for the uplink time domain baseband signals to obtain uplink frequency domain baseband signals, and transmit the uplink frequency domain baseband signals to a CBPU corresponding to a cell cluster where the RRU is located. The CBPU performs resource block demapping for the uplink frequency domain baseband signals and demultiplexes signals of each user from corresponding subcarriers.

After the CBPU demultiplexes the signals of each user from the corresponding subcarriers, a switching module in the CBPU may transmit the signals of each user to a corresponding BBU according to a preset resource configuration list.

According to the above technical solution provided in the embodiment of the present invention, the resource block demapping and FFT processing are performed first to demultiplex the signals of each user. In this case, only the user signals to be processed among the uplink frequency domain baseband signals, rather than all baseband signals, need to be transmitted to the corresponding BBUs. In this way, the requirement on the bandwidth for transmitting radio signals is reduced in the C-RAN system.

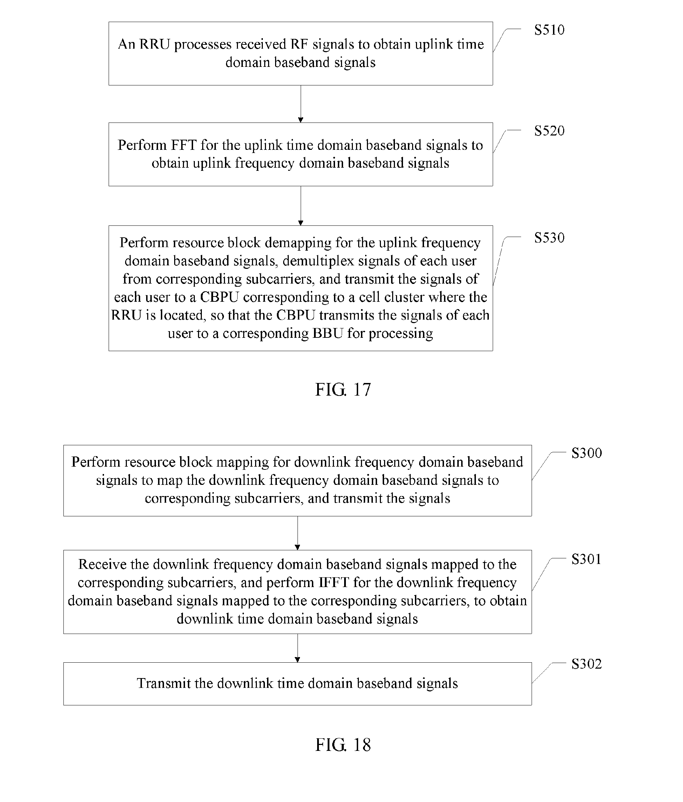

As shown in FIG. 17, an embodiment of the present invention provides a frequency domain transmission method, including the following steps:

S51O. An RRU processes received RF signals to obtain uplink time domain baseband signals.

S520. Perform FFT for the uplink time domain baseband signals to obtain uplink frequency domain baseband signals.

S530. Perform resource block demapping for the uplink frequency domain baseband signals, demultiplex signals of each user from corresponding subcarriers, and transmit the signals of each user to a CBPU corresponding to a cell cluster where the RRU is located so that the CBPU transmits the signals of each user to a corresponding BBU for processing.

According to the above technical solution provided in the embodiment of the present invention, the resource block demapping and FFT processing are performed first to demultiplex the signals of each user. In this case, only the user signals to be processed among the uplink frequency domain baseband signals, rather than all the baseband signals, need to be transmitted to the corresponding BBUs. In this way, the requirement on the bandwidth for transmitting radio signals is reduced in the C-RAN system.

As shown in FIG. 18, an embodiment of the present invention provides a frequency domain transmission method, including the following steps:

S301. Receive downlink frequency domain baseband signals mapped to corresponding subcarriers, and perform IFFT for the downlink frequency domain baseband signals mapped to the corresponding subcarriers, to obtain downlink time domain baseband signals.

S302. Transmit the downlink time domain baseband signals.

As shown in the dashed block in FIG. 18, in an embodiment, the method may further include:

S300. Perform resource block mapping for the downlink frequency domain baseband signals to map the downlink frequency domain baseband signals to the corresponding subcarriers, and transmit the signals.

In an embodiment, in step S300, the RRU may perform resource block mapping for the downlink frequency domain baseband signals to map the downlink frequency domain baseband signals to the corresponding subcarriers, and transmit the signals. In this case, the downlink frequency domain baseband signals are from a CPBU corresponding to a cell cluster where the RRU is located. Further, in this case, step S302 may be specifically that the RRU transforms the downlink time domain baseband signals into downlink RF signals, and transmits the signals.

In an embodiment, in step S300, the CBPU may perform resource block mapping for the downlink frequency domain baseband signals, and transmit the signals. In this case, S301 may be as follows: The CBPU receives downlink frequency domain baseband signals that are transmitted internally and mapped to corresponding subcarriers, and performs IFFT for the downlink frequency domain baseband signals mapped to the corresponding subcarriers, to obtain downlink time domain baseband signals. Step 302 may be specifically that the CBPU transmits the linear time domain baseband signals to the corresponding RRUs.

According to the above technical solution provided in the embodiment of the present invention, a resource mapping module and a transforming module are configured before a switching module, so that the signals on the corresponding subcarriers do not need to be transmitted between the CBPU and the RRU. This reduces the bandwidth for transmitting signals between the CBPU and the RRU.

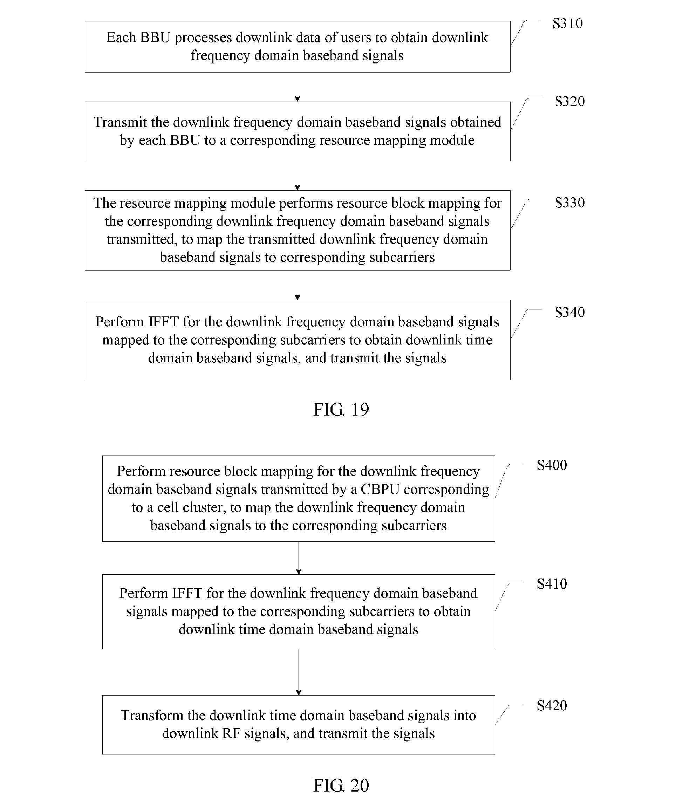

As shown in FIG. 19, an embodiment of the present invention provides a frequency domain transmission method, including the following steps:

S310. Each BBU processes downlink data of users to obtain downlink frequency domain baseband signals.

S320. Transmit the downlink frequency domain baseband signals obtained by each BBU to a corresponding resource mapping module.

According to an embodiment, in step S320, each downlink frequency domain baseband signal may be transmitted to the corresponding resource mapping module according to a preset resource configuration list, where the resource configuration list records a mapping relationship between user information and the resource mapping module.

S330. The resource mapping module performs resource block mapping for the corresponding downlink frequency domain baseband signals transmitted, to map the transmitted downlink frequency domain baseband signals to corresponding subcarriers.

As shown in the dashed block in FIG. 19, in an embodiment, the method may further include the following step:

S340. Perform IFFT for the downlink frequency domain baseband signals mapped to the corresponding subcarriers to obtain downlink time domain baseband signals, and transmit the signals.

After IFFT is performed in step S340, the obtained downlink time domain baseband signals are transmitted to an RRU.

According to the above technical solution provided in the embodiment of the present invention, a resource mapping module and a transforming module are configured before a switching module, so that the signals on the corresponding subcarriers do not need to be transmitted between the CBPU and the RRU. This reduces the bandwidth for transmitting signals between the CBPU and the RRU.

As shown in FIG. 20, an embodiment of the present invention provides a frequency domain transmission method, including the following steps:

S410. Perform IFFT for downlink frequency domain baseband signals mapped to corresponding subcarriers, to obtain downlink time domain baseband signals.

S420. Transform the downlink time domain baseband signals into downlink RF signals, and transmit the signals.

As shown in the dashed block in FIG. 20, in an embodiment, before step S410, the method may further include the following step:

S400. Perform resource block mapping for the downlink frequency domain baseband signals transmitted by a CBPU corresponding to a cell cluster, to map the downlink frequency domain baseband signals to the corresponding subcarriers.

According to the above technical solution provided in the embodiment of the present invention, a resource mapping module and a transforming module are configured before a switching module, so that the signals on the corresponding subcarriers do not need to be transmitted between the CBPU and the RRU. This reduces the bandwidth for transmitting signals between the CBPU and the RRU.

Persons of ordinary skill in the art may understand that all or a part of the steps of the methods according to the embodiments may be implemented by a computer program instructing hardware. The program may be stored in a computer readable storage medium. When the program runs, the methods according to the embodiments may be executed. The storage medium may be a magnetic disk, a CD-ROM, a read-only memory (Read-Only Memory, ROM) or a random access memory (Random Access Memory, RAM).

The above are merely some embodiments for illustrating the present invention, and persons of ordinary skills in the art can derive various modifications or variations from what the application discloses without departing from the idea and the scope of the present invention.

## Claims

1. A centralized baseband processing unit CBPU, comprising a switching module and at least one base band unit BBU and further comprising a resource mapping module, wherein:
the resource mapping module is configured to perform resource block demapping for uplink frequency domain baseband signals obtained through Fast Fourier Transform FFT, and demultiplex signals of each user from corresponding subcarriers;
the switching module is configured to transmit the signals of each user to the corresponding BBU; and
the BBU is configured to process the received user signals.

2. The CBPU according to claim 1, further comprising:
a transforming module, configured to perform FFT for each of uplink time domain baseband signals from a remote RF unit RRU in a cell cluster corresponding to the CBPU to obtain the uplink frequency domain baseband signals.

3. The CBPU according to claim 1 or 2, wherein the switching module is specifically configured to transmit the signals of each user to the corresponding BBU according to a preset resource configuration list, wherein the resource configuration list records a mapping relationship between user information and the BBUs.

4. The CBPU according to claim 1, wherein:
the BBUs are further configured to process downlink data streams of users to obtain downlink frequency domain baseband signals, and transmit the downlink frequency domain baseband signals to the switching module;
the switching module is further configured to transmit the downlink frequency domain baseband signals transmitted by the BBUs to the corresponding resource mapping module; and
the resource mapping module is further configured to perform resource block mapping for the corresponding downlink frequency domain baseband signals transmitted by the switching module, to map the transmitted downlink frequency domain baseband signals to corresponding subcarriers.

5. The CBPU according to claim 4, wherein:
the transforming module is further configured to perform Inverse Fast Fourier Transform IFFT for the downlink frequency domain baseband signals mapped to the corresponding subcarriers to obtain downlink time domain baseband signals, and transmit the signals.

6. The CBPU according to claim 5, wherein the switching module is specifically configured to:
transmit the downlink frequency domain baseband signals to the corresponding resource mapping module according to a preset resource configuration list, wherein the resource configuration list records a mapping relationship between user information and the resource mapping module.

7. A remote RF unit RRU, comprising:
an RF processing module, configured to process received RF signals to obtain uplink time domain baseband signals; and
a transforming module, configured to perform FFT for the uplink time domain baseband signals to obtain uplink frequency domain baseband signals, and transmit the uplink frequency domain baseband signals to a resource mapping module, so that the resource mapping module performs resource block demapping for the uplink frequency domain baseband signals and demultiplexes signals of each user from corresponding subcarriers.

8. The RRU according to claim 7, further comprising:
a resource mapping module, configured to perform resource block demapping for the uplink frequency domain baseband signals obtained by the transforming module, demultiplex the signals of each user from the corresponding subcarriers, and transmit the signals of each user to a CBPU corresponding to a cell cluster where the RRU is located, so that the CBPU transmits signals of each user to a BBU corresponding to the signals of the user for processing.

9. A remote RF unit RRU, comprising:
a transforming module, configured to perform IFFT for downlink frequency domain baseband signals mapped to corresponding subcarriers, to obtain downlink time domain baseband signals; and
an RF processing module, configured to transform the downlink time domain baseband signals into downlink RF signals, and transmit the signals.

10. The RRU according to claim 9, further comprising:
a resource mapping module, configured to perform resource block mapping for downlink frequency domain baseband signals transmitted by a CBPU corresponding to a cell cluster where the RRU is located, to map the downlink frequency domain baseband signals to corresponding subcarriers.

11. A frequency domain transmission method, comprising:
performing resource block demapping for uplink frequency domain baseband signals obtained through FFT, and demultiplexing signals of each user from corresponding subcarriers;
transmitting the signals of each user to a corresponding BBU; and
processing, by the corresponding BBU, the received user signals.

12. The method according to claim 11, wherein the uplink frequency domain baseband signals are received from an RRU; or uplink time domain baseband signals are obtained by processing received RF signals, and FFT is performed for the uplink time domain baseband signals to obtain the uplink frequency domain baseband signals.

13. The method according to claim 11, wherein:
the performing the resource block demapping for the uplink frequency domain baseband signals obtained through FFT comprises: performing, by a CPBU, FFT for each of uplink time domain baseband signals transmitted by an RRU in a corresponding cell cluster to obtain the uplink frequency domain baseband signals, and performing the resource block demapping for the uplink frequency domain baseband signals.

14. The method according to claim 11, wherein:
the performing the resource block demapping for the uplink frequency domain baseband signals obtained through FFT comprises:
processing, by an RRU, received RF signals to obtain uplink time domain baseband signals; and
performing FFT for the uplink time domain baseband signals to obtain the uplink frequency domain baseband signals, and transmitting the uplink frequency domain baseband signals to a CBPU corresponding to a cell cluster where the RRU is located; and performing, by the CBPU, the resource block mapping for the uplink frequency domain baseband signals.

15. The method according to any one of claims 11 to 14, wherein the transmitting the signals of each user to the corresponding BBU specifically comprises:
transmitting the signals of each user to the corresponding BBU according to a preset resource configuration list, wherein the resource configuration list records a mapping relationship between user information and the BBUs.

16. A frequency domain transmission method, comprising:
receiving downlink frequency domain baseband signals mapped to corresponding subcarriers, and performing IFFT for the downlink frequency domain baseband signals mapped to the corresponding subcarriers to obtain downlink time domain baseband signals; and
transmitting the downlink time domain baseband signals.

17. The method according to claim 16, further comprising:
performing resource block mapping for the downlink frequency domain baseband signals, to map the downlink frequency domain baseband signals to the corresponding subcarriers, and transmitting the signals.

18. The method according to claim 17, wherein:
the performing the resource block mapping for the downlink frequency domain baseband signals, to map the downlink frequency domain baseband signals to the corresponding subcarriers, and transmitting the signals specifically comprise: performing, by an RRU, the resource block mapping for the downlink frequency domain baseband signals, to map the downlink frequency domain baseband signals to the corresponding subcarriers, and transmitting the signals;
wherein the downlink frequency domain baseband signals are from a CPBU corresponding to a cell cluster where the RRU is located.

19. The method according to claim 17 or 18, wherein the transmitting the downlink time domain baseband signals specifically comprises: transforming the downlink time domain baseband signals into downlink RF signals, and transmitting the signals.

20. The method according to claim 17, wherein:
the performing the resource block mapping for the downlink frequency domain baseband signals and transmitting the signals specifically comprise: performing, by a CBPU, the resource block mapping for the downlink frequency domain baseband signals, and transmitting the signals.

21. The method according to claim 17, wherein:
the receiving the downlink frequency domain baseband signals mapped to the corresponding subcarriers, and performing IFFT for the downlink frequency domain baseband signals mapped to the corresponding subcarriers to obtain the downlink time domain baseband signals specifically comprise: receiving, by a CBPU, the downlink frequency domain baseband signals that are mapped to the corresponding subcarriers and are transmitted internally, and performing IFFT for the downlink frequency domain baseband signals mapped to the corresponding subcarriers to obtain the downlink time domain baseband signals; and
the transmitting the downlink time domain baseband signals specifically comprises:
transmitting, by the CBPU, the linear time domain baseband signals to corresponding RRUs.
